# NEUE EUROPÄISCHE PATENTSCHRIFT

(11) **EP 0 269 972 B2**
(45) Veröffentlichungstag und Bekanntmachung des Hinweises auf die Entscheidung über den Einspruch: **27.11.1996**
(45) Hinweis auf die Patenterteilung: 03.02.1993
(21) Anmeldenummer: 87117280.5
(22) Anmeldetag: 24.11.1987
(51) Int. Cl.: C08G 18/08, C08G 18/28

(54) **Verfahren zur Herstellung von in Wasser löslichen oder dispergierbaren Polyurethanen und ihre Verwendung zur Beschichtung beliebiger Substrate**
Process for the preparation of in water soluble or dispersable polyurethanes and their use as coatings for various substrates
Procédé de préparation des polyuréthanessolubles ou dispersables dans l'eau et leur utilisation pour le revêtement de substrats divers

(30) Priorität: 04.12.1986 DE 3641494
(43) Veröffentlichungstag der Anmeldung: 08.06.1988
(73) Patentinhaber: BAYER AG, 51368 Leverkusen (DE)
(72) Erfinder: Mosbach, Jürgen, Dr., D-5090 Leverkusen (DE); Pedain, Josef, Dr., D-5000 Köln 80 (DE); Noll, Klaus, Dr., D-5000 Köln 80 (DE)

(56) Entgegenhaltungen:
- EP-A- 0 017 199
- EP-A- 0 024 296
- EP-A- 0 148 970
- EP-A- 0 219 677

## Beschreibung

Gegenstand der Erfindung ist ein Verfahren zur Herstellung in Wasser löslicher oder dispergierbarer, Carboxylatgruppen aufweisender Polyurethane, die als Gegenionen zu den Carboxylatgruppen Ammoniumgruppen aufweisen, und ihre Verwendung in Form ihrer wäßrigen Lösungen oder Dispersionen als Beschichtungsmittel für beliebige Substrate.

Wäßrige Lösungen oder Dispersionen von Polyurethanen sind bekannt.

Die DE-AS 1 495 745 beschreibt beispielsweise u.a. wäßrige Dispersionen von Carboxylatgruppen aufweisenden Polyurethanen, wobei als Gegenionen für die Carboxylatgruppen insbesondere ternäre Ammoniumionen auf Basis von flüchtigen tertiären Aminen zum Einsatz gelangen.

In der US-PS 3 412 054 werden carboxylatgruppenhaltige Polyurethandispersionen beschrieben, deren Wasserverdünnbarkeit begrenzt ist und der Anwesenheit eines Colösemittels bedarf. Der für die Wasserverdünnbarkeit erforderliche Gehalt an eingebauten Carboxylgruppen beträgt 30 bis 112 mEq. pro 100 g. In den aufgeführten Beispielen wird ausschließlich Dimethylethanolamin als Neutralisationsagens eingesetzt.

Nichtionische hydrophile ins Polymergerüst, eingebaute Polyethylenoxidsegmente bewirken im Vergleich zu den rein ionisch hydrophilierten Polyurethanen eine verbesserte Wasser-, Elektrolyt- und Froststabilität der Dispersionen, allerdings verbunden mit einer geringeren Thermostabilität (DE-OS 2 314 512, 2 314 513). Als besonders vorteilhaft für das Eigenschaftsniveau wäßriger Polyurethanharnstoffdispersionen erwies sich die Kombination eingebauter hydrophiler Polyethylenoxidsegmente mit eingebauten rein ionisch hydrophilen Zentren (DE-OS 2 551 094, 2 651 506, EP-A-000 347). Es ergaben sich Vorteile in Eigenschaften wie rheologisches Verhalten, Koagulationsstabilität gegenüber Elektrolyt- und Kälteeinfluß und Erhöhung der Wasser- und Lösungsmittelbeständigkeit.

Abgesehen von Beispiel 11 der DE-AS 1 495 745, welches die Herstellung einer in anwendungstechnischer Hinsicht unbefriedigenden, Ammoniumgruppen als Gegenionen aufweisenden Dispersion beschreibt, kann der vorveröffentlichten Lehre des Standes der Technik insbesondere entnommen werden, daß bei der Herstellung von wäßrigen Dispersionen oder Lösungen von Carboxylatgruppen aufweisenden Polyurethanen zur Neutralisation der Carboxylgruppen vorzugsweise tertiäre Amine zu verwenden sind, da die Verwendung eines Neutralisationsmittels mit gegenüber Isocyanatgruppen reaktionsfähigen Gruppen zu unerwünschten Nebenreaktionen führt. So wird beispielsweise in der US-PS 4 408 008 (Kolonne 9, Zeile 46 - Kolonne 10, Zeile 1) ausdrücklich empfohlen, als Neutralisationsmittel solche Amine zu verwenden, die keine gegenüber Isocyanatgruppen reaktionsfähige Wasserstoffatome aufweisen.

Der Vorteil der Verwendung von leicht flüchtigen tertiären Aminen bei der ionischen Hydrophilierung liegt in dem Umstand begründet, daß die Amine bei der Herstellung von Überzügen unter Verwendung der entsprechenden Polyurethandispersionen abdiffundieren, so daß sich die Wasserresistenz der Überzüge erhöht. Der Nachteil derartiger leicht flüchtiger tertiärer Amine liegt in ihrer öko- und toxikologischen Bedenklichkeit.

Es war daher die der Erfindung zugrundeliegende Aufgabe solche in Wasser lösliche oder dispergierbare, eingebaute Carboxylatgruppen aufweisende Polyurethane zur Verfügung zu stellen, die folgende Vorteile in sich vereinigen:
1.) Die Gegenionen der Carboxylatgruppen sollten leicht flüchtig sein, damit aus wäßrigen Lösungen oder Dispersionen der Polyurethane hergestellte Überzüge nach ihrer Herstellung eine gute Wasserresistenz aufweisen.
2.) Die den Gegenionen zugrundeliegende Base sollte im Vergleich zu leicht flüchtigen organischen Aminen in physiologischer Hinsicht weitgehend unbedenklich sein.
3.) Die wäßrigen Lösungen oder Dispersionen sollten einerseits eine gute Lagerstabilität aufweisen und andererseits zu Überzügen führen, deren Eigenschaften dem hohen Eigenschaftsniveau der bekannten Dispersionen entspricht, d.h. dem Eigenschaftsniveau des aus der Dispersion gemäß Beispiel 11 der DE-AS 1 495 745 erhaltenen Überzugs überlegen sind.

Diese Aufgabe konnte mit der Bereitstellung des Verfahrens zur Herstellung der nachstehend näher beschriebenen erfindungsgemäßen Polyurethane gelöst werden.

Gegenstand der Erfindung ist ein Verfahren zur Herstellung von in Wasser dispergierbaren oder löslichen Polyurethanen durch Umsetzung von
a) organischen Polyisocyanaten mit
b) organischen Verbindungen mit zwei gegenüber Isocyanatgruppen reaktionsfähigen Gruppen des Molekulargewichtsbereichs 300 bis 5000,
c) als Kettenverlängerungsmittel oder Vernetzer wirkenden Verbindungen mit mindestens zwei gegenüber Isocyanatgruppen reaktionsfähigen Gruppen des Molekulargewichtsbereichs 32 bis 299,
d) innerhalb von Polyetherketten angeordnete Ethylenoxideinheiten aufweisenden Aufbaukomponenten ausgewählt aus der Gruppe bestehend aus
   d1) Diisocyanaten und/oder im Sinne der Isocyanatpolyadditionsreaktion difunktionellen Verbindungen mit gegenüber Isocyanatgruppen reaktionsfähigen Wasserstoffatomen mit seitenständigen, Ethylenoxid-Einheiten aufweisenden Polyetherketten,
   d2) Monoisocyanaten und/oder im Sinne der Isocyanatpolyadditionsreaktion monofunktionellen Verbindungen mit gegenüber
      Isocyanatgruppen reaktionsfähigen Wasserstoffatomen mit Ethylenoxideinheiten aufweisenden Polyetherketten und
   d3) Gemischen von Verbindungen der unter d1) und d2) genannten Art,
e) Dihydroxymonocarbonsäuren, gegebenenfalls unter Mitverwendung von
f) im Sinne der Isocyanatpolyadditionsreaktion monofunktionellen, Ethylenoxideinheiten-freien organischen Verbindungen mit gegenüber Isocyanatgruppen reaktionsfähigen Gruppen, sowie gegebenenfalls unter Mitverwendung von
g) aus der Polyisocyanatchemie an sich bekannten Hilfs- und Zusatzmitteln,
wobei die Umsetzung der Ausgangskomponenten a) bis f) zweistufig unter Einhaltung eines Äquivalentverhältnisses von Isocyanatgruppen zu gegenüber Isocyanatgruppen reaktionsfähigen Gruppen von 0,8:1 bis 2:1 zumindest am Ende der Umsetzung in Gegenwart eines gegenüber Isocyanatgruppen inerten, mit Wasser mischbaren Lösungsmittels erfolgt, so daß eine Lösung eines Polyurethans mit einem Isocyanatgruppengehalt von bis zu 10 Gew.-% in einem derartigen Lösungsmittel vorliegt, anschließende, zumindest teilweise Neutralisation der in dem Polyurethan vorliegenden Carboxylgruppen, wobei Art und Mengenverhältnisse der Ausgangsmaterialien und der Neutralisationsgrad so bemessen wird, daß in dem gelösten Polyurethan 0.5 bis 30 Gew.-%, bezogen auf Feststoff, an innerhalb von end- und/oder seitenständig angeordneten Polyetherketten eingebauten Ethylenoxideinheiten und als alleinige weitere hydrophile Zentren 0,1 bis 120 Milliäquivalente pro 100 g Feststoff an Carboxylatgruppen vorliegen, wobei die Gesamtmenge dieser hydrophilen Gruppen so bemessen ist, daß die Löslichkeit bzw. Dispergierbarkeit der Polyurethane in Wasser gewährleistet ist,
dadurch gekennzeichnet, daß man als Dihydroxycarbonsäure solche der allgemeinen Formel 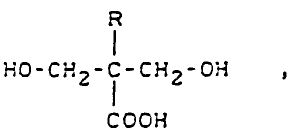 wobei R einen Alkylrest mit 1 bis 4 Kohlenstoffatomen bedeutet,
und als Neutralisationsmittel für die Carboxylgruppen Ammoniak verwendet und, falls eine wäßrige Lösung oder Dispersion der Polyurethane der organischen Lösung hergestellt werden soll, während oder anschließend an die Zugabe des als Neutralisationsmittel eingesetzten Ammoniaks das als Lösungs- bzw. Dispergiermittel dienende Wasser hinzufügt.

Gegenstand der Erfindung ist schließlich auch die Verwendung von wäßrigen Lösungen oder Dispersionen der erfindungsgemäßen Polyurethane zur Herstellung von Überzügen auf beliebigen Substraten.

Die wichtigste Säure der zuletzt genannten allgemeinen Formel, die Dimethylolpropionsäure wurde zwar bei speziellen Verfahren des Standes der Technik zur Herstellung von hydrophil modifizierten Polyurethanen bereits gleichzeitig mit Ammoniak als Ausgangsmaterial eingesetzt, jedoch können die diesbezüglichen Vorveröffentlichungen in keinen näheren Zusammenhang mit der Erfindung gebracht werden. In diesem Zusammenhang erwähnenswert sind insbesondere EP-A-0 024 296 (Beispiel 3) bzw. EP-A-0 148 970 (Beispiel 25), in denen die Herstellung von wäßrigen Dispersionen von Oligourethanen beschrieben werden, die als Endgruppen Harnstoffgruppen aufweisen und daher mittels Formaldehyd hitzevernetzbar sind. Die Herstellung der Harnstoffgruppen erfolgt dergestalt, daß man NCO-Prepolymere mit wäßrigem Ammoniak zur Reaktion bringt. Bei der Herstellung der NCO-Prepolymeren wird auch Dimethylolpropionsäure eingesetzt, so daß auch eine Neutralisationsreaktion der eingebauten Carboxylgruppen durch das Ammoniak in Betracht gezogen werden muß. Dies gilt insbesondere für EP-A-0 148 970, bei welcher Ammoniak im Überschuß, bezogen auf die NCO-Gruppen zum Einsatz gelangt. Die eigentliche Neutralisation der eingebauten Carboxylgruppen erfolgt anschließend durch Zugabe eines tert. Amins und Austreiben des leicht flüchtigen Ammoniaks durch diese unter den Verfahrensbedingungen nicht flüchtige Base, jedoch kann nicht ausgeschlossen werden, daß intermediär mit Ammoniumgruppen neutralisierte Carboxylgruppen vorliegen. Ein wesentlicher Unterschied gegenüber den erfindungsgemäßen Polyurethanen besteht jedoch darin, daß die Hydrophilie im wesentlichen auf ebenfalls vorliegende Natriumsulfonatgruppen zurückzuführen ist. Die Herstellung von Polyurethandispersionen, die neben end- und/oder seitenständig angeordneten hydrophilen Polyetherketten als alleinige weitere hydrophile Zentren Ammoniumcarboxylatgruppen der erfindungswesentlichen Art enthalten, wird in den Vorveröffentlichungen ebensowenig angesprochen, wie die der Erfindung zugrunde liegende Aufgabenstellung und deren Lösung.

Im Rahmen der Erfindung umfaßt der Begriff "Polyurethan" auch Harnstoffgruppen aufweisende Polyurethanpolyharnstoffe.

Als Polyisocyanatkomponente a) eignen sich für das erfindungsgemäße Verfahren beliebige, aus der Polyurethanchemie an sich bekannte Polyisocyanate, die im allgemeinen ein Molekulargewicht von 112 bis 1000, vorzugsweise 140 bis 400 aufweisen. In Betracht kommen beispielsweise Polyisocyanate der allgemeinen Formel Q(NCO)ₙ, wobei Q für einen organischen Rest steht, wie er durch Entfernung der Isocyanatgruppen aus einem organischen Polyisocyanat des Molekulargewichtsbereichs 112 bis 1000, vorzugsweise 140 bis 400, erhalten wird, und n für 2 bis 4, vorzugsweise 2 und 3 steht. Besonders bevorzugte für das erfindungsgemäße Verfahren geeignete Polyisocyanate sind solche der angegebenen allgemeinen Formel, für welche Q für einen zweiwertigen aliphatischen Kohlenwasserstoffrest mit 4 bis 18 Kohlenstoffatomen oder einen zweiwertigen cycloaliphatischen Kohlenwasserstoffrest mit 5 bis 15 Kohlenstoffatomen, für einen zweiwertigen aromatischen Kohlenwasserstoffrest mit 6 bis 15 Kohlenstoffatomen oder einen araliphatischen Kohlenwasserstoffrest mit 7 bis 15 Kohlenstoffatomen steht. Typische Vertreter sind z.B. Tetramethylendiisocyanat, Hexamethylendiisocyanat, Dodecamethylendiisocyanat, 2,2,4-Trimethylhexandiisocyanat, Undercandiisocyanat-1,11, Lysinesterdiisocyanat, Cyclohexan-1,3- und -1,4-diisocyanat, 1-Isocyanato-3-isocyanatomethyl-3,5,5-trimethylcyclohexan, 4,4'-Diisocyanatodicyclohexylmethan oder auch aromatische Diisocyanate wie 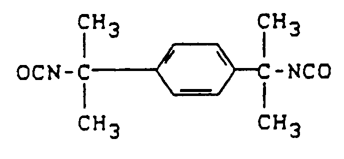 und das entsprechende 1,3-Isomere, 2,4-Diisocyanatotoluol, 2,6-Diisocyanatotoluol, aus diesen Isomeren bestehende Gemische und 4,4'Diisocyanatodiphenylmethan.

Zu den höherfunktionellen Polyisocyanaten, die zum Zwecke der Verzweigung oftmals anteilig mitverwendet werden, gehören beispielsweise Urethangruppen aufweisende Triisocyanate, wie sie durch Umsetzung aus den beispielhaft genannten Diisocyanaten mit unterschüssigen Mengen an trifunktionellen, niedermolekularen Polyhydroxylverbindungen der unten beispielhaft genannten Art und gegebenenfalls anschließende destillative Entfernung des überschüssigen Ausgangsdiisocyanats hergestellt worden sind; durch Trimerisierung der beispielhaft genannten Diisocyanate erhaltene, Isocyanuratgruppen aufweisende Polyisocyanate oder Biuretpolyisocyanate auf Basis der beispielhaft genannten Diisocyanate.

Zu den Ausgangskomponenten b) gehören insbesondere die aus der Polyurethanchemie an sich bekannten höhermolekular Polyhydroxylverbindungen des Molekulargewichtsbereichs 300 bis 5000, vorzugweise 500 bis 3000 wie z.B. 1) die in der Polyurethanchemie an sich bekannten Dihydroxypolyester aus Dicarbonsäuren, z.B. Bernsteinsäure, Adipinsäure, Korksäure, Azelainsäure, Sebacinsäure, Phthalsäure, Isophthalsäure, Terephthalsäure, Tetrahydrophthalsäure usw. und Diolen, wie z.B. Ethylenglykol, Propandiol-1,2, Propandiol-1,3, Diethylenglykol. Butandiol-1,4-, Hexandiol-1,6, Octandiol-1,8, Neopentylglykol, 2-Methylpropandiol-1,3, oder die verschiedenen isomeren Bishydroxymethylcyclohexane; 2) die in der Polyurethanchemie an sich bekannten Polylactone, wie z.B. die auf den obengenannten zweiwertigen Alkoholen gestarteten Polymerisate des ε-Caprolactons; 3) die in der Polyurethanchemie an sich bekannten Polycarbonate, wie sie durch Umsetzung beispielsweise der obengenannten Diole mit Diarylcarbonaten oder Phosgen zugänglich sind; 4) die in der Polyurethanchemie an sich bekannten Polyether, wie z.B. die unter Verwendung von zweiwertigen Startemolekülen, wie Wasser, den obengenannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, daß das resultierende Polyetherdiol maximal 10 Gew.-% an Ethylenoxideinheiten enthält.

Vorzugweise werden solche Polyetherdiole verwendet, die ohne Mitverwendung von Ethylenoxid, d.h. insbesondere unter ausschließlicher Verwendung von Propylenoxid und Tetrahydrofuran erhalten wurden.

Neben diesen höhermolekuralen difunktionellen Verbindungen kann die Komponente b) auch tri- oder höherfunktionelle Polyhydroxylverbindungen der genannten Art, insbesondere Polyetherpolyole aufweisen, deren Molekulargewicht innerhalb der genannten Grenzen liegt, und die unter (Mit)Verwendung von höherfunktionellen Ausgangsmaterialien wie beispielsweise Trimethylolpropan, Glycerin oder Ethylendiamin erhalten worden sind.

Auch die Verwendung von Polyetherpolyaminen des genannten Molekulargewichstbereichs, beispielsweise solchen wie sie durch Überführung der Hydroxylgruppen der beispielhaft genannten Polyetherpolyole in primäre Aminogruppen erhalten werden, ist grundsätzlich möglich, allerdings weniger bevorzugt.

Zu den Aufbaukomponenten c) gehören beliebige im Sinne der Isocyanat-Additionsreaktion mindestens difunktionelle Verbindungen eines unter 300 liegenden Molekulargewichts. Als Aufbaukomponenten c) kommen sowohl im Sinne der Isocyanatadditionsreaktion difunktionelle Verbindungen (Kettenverlängerungsmittel) als auch im Sinne der Isocyanatpolyadditionsreaktion mindestens trifunktionelle Verbindungen (Vernetzer) bzw. beliebige Gemische derartiger Verbindungen in Betracht. Beispiele für geeignete Aufbaukomponenten c) sind niedermolekulare mehrwertige Alkohole wie Ethylenglykol, Propylenglykol, Tetramethylendiol, Hexamethylendiol, Glycerin, Trimethylolpropan, Trimethylolethan, die isomeren Hexantriole oder Pentaerythrit; niedermolekulare Diamine wie z.B. Ethylendiamin, 1,2- und 1,3-Diaminopropan, 1,6-Diaminohexan, 1,3-Diamino-2,2-dimethylpropan, Isophorondiamin, 1,3- und 1,4-Diaminohexan, 4,4'-Diamino-dicyclohexylmethan, 4,4'-Diamino-3,3'-dimethyl-dicyclohexylmethan, 1,4-Bis-(2-amino-prop-2-yl)-cyclohexan oder 3,3'-Dimethyl-4,4'-diamino-dicyclohexylmethan oder auch Hydrazin, Hydrazide bzw. beliebige Gemische derartiger Diamine und Hydrazine; höherfunktionelle Polyamine wie Diethylentriamin, Triethylentetramin, Dipropylentriamin, Tripropylentetramin, hydrierte Anlagerungsprodukte von Acrylnitril an aliphatische oder cycloaliphatische Diamine, vorzugsweise entsprechender Anlagerungsverbindungen einer Acrylnitrilgruppe an ein Molekül eines Diamins, z.B. Hexamethylenpropylen-triamin, Tetramethylen-propylentriamin, Isophoron-propylen-triamin, 1,4- oder 1,3-Cyclohexanpropylentriamin oder beliebige Gemische derartiger Polyamine.

Bei den Aufbaukomponenten d) handelt es sich um innerhalb von Polyetherketten eingebaute Ethylenoxideinheiten aufweisender Verbindungen und zwar um d1) Diisocyanate und/oder im Sinne der Isocyanatpolyadditionsreaktion difunktionelle Verbindungen mit gegenüber Isocyanatgruppen reaktionsfähigen Wasserstoffatomen mit seitenständigen, Ethylenoxid-Einheiten aufweisenden Polyetherketten, d2) Monoisocyanate und/oder im Sinne der Isocyanat-Polyadditionsreaktion monofunktionelle Verbindungen mit gegenüber Isocyanatgruppen reaktionsfähigen Wasserstoffatomen mit Ethylenoxideinheiten aufweisenden Polyetherketten oder um d3) Gemische von Verbindungen d1) und d2).

Zu den Aufbaukomponenten d1) gehören insbesondere Verbindungen der allgemeinen Formel (I) 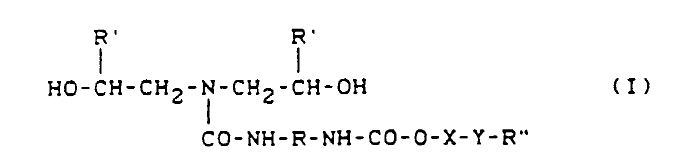 und/oder Verbindungen der allgemeinen Formel (II)

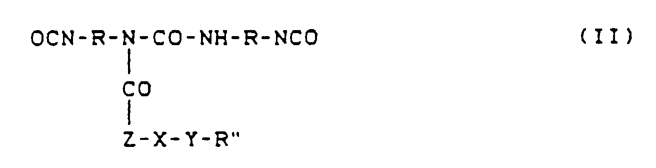

Zu den Verbindungen d2) gehören insbesondere solche der allgemeinen Formel (III)

HO-X-Y-R" (III)

der Formel (IV)

HR'N-X-Y-R" (IV)

und/oder Verbindungen der allgemeinen Formel (V)

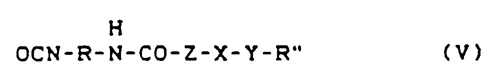

In diesen Formeln (I) bis (V) stehen
- R: für einen zweiwertigen Rest, wie er durch Entfernung der Isocyanatgruppen auf einem Diisocyanat der Formel R(NCO)₂ der vorstehend genannten Art erhalten wird,
- R': für Wasserstoff oder einen einwertigen Kohlenwasserstoffrest mit 1 bis 8 Kohlenstoffatomen, vorzugsweise für Wasserstoff oder eine Methylgruppe,
- R": für einen einwertigen Kohlenwasserstoffrest mit 1 bis 12 Kohlenstoffatomen, vorzugsweise einen unsubstituierten Alkylrest mit 1 bis 4 Kohlenstoffatomen,
- X: für den Rest, wie er durch Entfernen des endständigen Sauerstoffatoms aus einer Polyalkylenoxidkette mit 5 bis 90, vorzugsweise 20 bis 70 Kettengliedern erhalten wird, welche Kettenglieder zumindest zu 40 %, vorzugsweise zumindest zu 65 % aus Ethylenoxid-Einheiten bestehen und die neben Ethylenoxid-Einheiten auch Propylenoxid-, Butylenoxid- oder Styroloxid-Einheiten darstellen können, wobei unter den letztgenannten Einheiten Propylenoxid-Einheiten bevorzugt sind,
- Y: für Sauerstoff oder -NR '"-, wobei R'" bezüglich seiner Definition R" entspricht,
- Z: für -NH- oder für einen Rest, der in seiner Bedeutung der Definition von Y entspricht.

Die Herstellung dieser hydrophilen Aufbaukomponenten (I) bis (V) erfolgt in Analogie zu US-PS 3 920 598, US-PS 3 905 929, US-PS 4 190 566 oder US-PS 4 237 264.

Zu den Aufbaukomponenten e) gehören 2,2-Bis-(hydroxymethyl)-alkanmonocarbonsäuren mit insgesamt 5 bis 8 Kohlenstoffatomen, d.h. Verbindungen der allgemeinen Formel 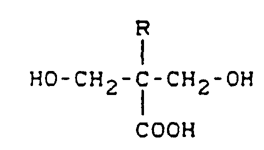 in welcher
- R: für einen Alkylrest mit 1 bis 4 Kohlenstoffatomen steht.

Besonders bevorzugt wird 2,2-Dimethylolpropionsäure als Aufbaukomponente e) verwendet.

Zu den gegebenenfalls mitzuverwendenden Aufbaukomponenten f) gehören Ethylenoxideinheiten-freie, im Sinne der Isocyanatpolyadditionsreaktion monofunktionelle Verbindungen mit gegenüber Isocyanatgruppen reaktionsfähigen Gruppen, wobei hier unter "im Sinne der Isocyanatadditionsreaktion monofunktionell" auch solche Verbindungen verstanden werden sollen, die zwar rein theoretisch mehr als eine gegenüber Isocyanatgruppen reaktionsfähige Gruppen aufweisen, wobei jedoch eine dieser Gruppen eine deutlich höhere Reaktivität gegenüber Isocyanatgruppen aufweist als die anderen, so daß die Verbindungen in erster Näherung selektiv wie eine monofunktionelle Verbindung reagieren.

Geeignete Aufbaukomponenten f) sind einwertige Alkohole oder Amine des Molekulargewichtsbereichs 31 bis 200 wie z.B. Methanol, Ethanol, Propanol, iso-Propanol, Cyclohexanol, Cyclooctanol; N,N-Dimethylethanolamin, Methyl-, Ethyl-, Propyl-, Isopropylamin, Cyclohexylamin, Cyclooctylamin, Diethylamin; Aminoalkohole wie Ethanolamin, Diethanolamin, Propanolamin oder Aminomethylpropanol.

Die letztgenannten Hydroxylgruppen aufweisenden Aminoalkohole gehören zu den obengenannten Verbindungen mit zwei gegenüber Isocyanatgruppen reaktionsfähigen Gruppen, die jedoch in erster Näherung wie monofunktionelle Verbindungen reagieren. Prinzipiell können auch höhermolekulare, kettenabbrechend wirkende Verbindungen wie beispielsweise gesättigte und ungesättigte Fettalkohole, Fettamine oder Fettsäuren wie Stearylamin, Oleylamin, Stearylalkohol, Oleylalkohol, Stearinsäure oder Ölsäure mitverwendet werden.

Zu den monofunktionellen Aufbaukomponenten f) gehören auch die aus der Polyurethanchemie an sich bekannten Blockierungsmittel für Isocyanatgruppen wie beispielsweise ε-Caprolactam, Oxime wie Acetonoxim, Butanonoxim, Cyclohexanonoxim oder CH-acide Verbindungen wie Malonsäurediethylester, Acetessigsäureethylester oder 2,4-Pentandion.

Die Aufbaukomponenten f) werden gegebenenfalls beim erfindungsgemäßen Verfahren miteverwendet, um einen evtl. Kettenabbruch zu erreichen.

Zu den gegebenenfalls mitzuverwendenden Hilfs- und Zusatzmitteln g) gehören beispielsweise Katalysatoren für die Isocyanat-Polyadditionsreaktion der aus der Polyurethanchemie an sich bekannten Art, Weichmacher, Füllstoffe oder Pigmente, die nicht nur den Polyurethanen nach ihrer Herstellung zugemischt sondern bereits zusammen mit den Ausgangskomponenten eingesetzt werden können, um so ihre innige Durchmischung mit den Polyurethanen zu erleichtern.

Die Herstellung der Polyurethane aus den Ausgangskomponenten a) bis f) erfolgt in an sich bekannter Weise mehrstufig, wobei die Mengenverhältnisse der Reaktionspartner so gewählt werden, daß das Äquivalentverhältnis von Isocyanatgruppen der Komponente a) und gegebenenfalls der Komponente d) zu gegenüber Isocyanatgruppen reaktionsfähigen Gruppen der Komponenten b), c), e), f) und gegebenenfalls d) bei 0,8:1 bis 2:1, vorzugsweise 0.95:1 bis 1,5:1 und insbesondere bei 0,95:1 bis 1,2:1 liegt, wobei die Komponente f) stets als monofunktionelle Komponente in die Berechnung eingeht.

In die Berechnung dieses Äquivalentverhältnisses gehen weder die Carboxylgruppen der Komponente e) noch das zur Herstellung von Lösungen oder Dispersionen der Polyurethane verwendete Wasser noch das zur Neutralisation der Carboxylgruppen eingesetzte Ammoniak ein.

Die Komponente c) wird im allgemeinen in einer Menge von 1 bis 80 Gew.-%, vorzugsweise 5 bis 70 Gew.-%, bezogen auf das Gewicht der Komponente b) verwendet.

Die Komponente d) gelangt in einer solchen Menge zum Einsatz, daß in dem letztendlich erhaltenen erfindungsgemäßen Polyurethan 0,5 bis 30, vorzugsweise 1 bis 20 Gew.-% an innerhalb von end- und/oder seitenständig angeordneten Polyetherketten eingebauten Ethylenoxideinheiten vorliegen.

Die Menge der Komponente e) und der Neutralisationsgrad der mit der Komponente e) eingebauten Carboxylgruppen wird so bemessen, daß in dem letztendlich erhaltenen Polyurethan 0,1 bis 120, vorzugweise 1 bis 80 Milliäquivalente pro 100 g Feststoff an Carboxylatgruppen vorliegen, wobei die Gesamtmenge der zuletzt genannten Ethylenoxideinheiten und dieser Carboxylatgruppen innerhalb der genannten Bereiche so bemessen sein muß, daß die Löslichkeit bzw. Dispergierbarkeit der Polyurethane in Wasser gewährleistet ist.

Im übrigen werden Art und Mengenverhältnisse der Ausgangskomponenten a) bis e) so bemessen, daß nach erfolgter Umsetzung dieser Ausgangsmaterialien in den resultierenden Polyurethanen maximal bis zu 10, vorzugsweise bis maximal 5 Gew.-%, bezogen auf Festkörper, an freien, nicht umgesetzten Isocyanatgruppen vorliegen.

Die gegebenenfalls mitzuverwendenden monofunktionellen Aufbaukomponenten f) werden, falls überhaupt, vorzugsweise maximal in einer solchen Menge mitverwendet, die der Menge der theoretisch gegebenenfalls nach der Umsetzung der Ausgangskomponenten a) bis e) noch vorliegenden freien Isocyanatgruppen entspricht.

Die Umsetzung der Ausgangskomponenten a) bis f) erfolgt mehrstufig, wobei jedoch zumindest am Ende der Umsetzung ein gegenüber Isocyanatgruppen inertes, mit Wasser mischbares Lösungsmittel mitverwendet wird, so daß die Umsetzungsprodukte letztendlich in Form einer Lösung in einem derartigen Lösungsmittel vorliegen. In diesem Zusammenhang bedeutet "Lösung" sowohl eine echte Lösung als auch eine Wasser-in-Öl-Emulsion, die dann entstehen kann, wenn beispielsweise einzelne der Aufbaukomponenten in Form von wäßrigen Lösungen zum Einsazt gelangen. Geeignete Lösungsmittel sind beispielsweise Aceton, Methylethylketon, N-Methylpyrrolidon oder beliebige Gemische derartiger Lösungsmittel. Die Menge dieser Lösungsmittel wird im allgemeinen so bemessen, daß 10 bis 70 gew.-%ige Lösungen der Umsetzungsprodukte aus den Ausgangskomponenten a) bis f) in dem Lösungsmittel anfallen, wobei das Gewicht der gegebenenfalls mitverwendeten Zusatzmittel g) nicht in die Berechnung eingeht.

Bei der Durchführung des Zweistufenverfahrens wird vorzugweise zunächst in der Schmelze aus überschüssigen Mengen aus Isocyanatgruppen aufweisenden Ausgangskomponenten a) und gegebenenfalls d) und Hydroxylgruppen aufweisenden Ausgangskomponenten b), c), e) und gegebenenfalls d) und f) unter Einhaltung eines NCO/OH-Äquivalentverhältnisses von 1,1:1 bis 3,5:1, vorzugsweise 1,2:1 bis 2,5:1 in Ab- oder Anwesenheit eines Lösungsmittels der beispielhaft genannten Art bei ca. 50 bis 150° C ein NCO-Prepolymer hergestellt, welches bei Abwesenheit von Lösungsmitteln anschließend in einem Lösungsmittel der beispielhaft genannten Art aufgenommen wird. Die so erhaltene Lösung wird dann mit weiteren Kettenverlängerungs- oder Vernetzungsmitteln c), die gegebenenfalls in Form wäßrige Lösungen eingesetzt werden, gegebenenfalls unter Mitverwendung von monofunktionellen Aufbaukomponenten f) zur Umsetzung gebracht, wobei als Komponente c) vorzugsweise primäre und/der sekundäre Aminogruppen aufweisende Aufbaukomponenten der oben beispielhaft genannten Art verwendet werden. Die Menge der in dieser zweiten Stufe verwendeten Aufbaukomponenten c) und f) wird hierbei so bemessen, daß da Äquivalentverhältnis aller in erster und zweiter Stufe zum Einsatz gelangender Ausgangskomponenten den obengemachten Angaben entspricht, wobei im Fall der Mitverwendung von monofunktionellen Aufbaukomponenten f) das Äquivalentverhältnis von Isocyanatgruppen zu gegenüber Isocyanatgruppen reaktionsfähigen Gruppen stets mindestens bei 1:1 liegt.

Es resultieren letztendlich Lösungen der Umsetzungsprodukte in dem genannten Lösungsmittel mit einem Feststoffgehalt innerhalb der obengenannten Bereiche.

Im Anschluß an die Herstellung dieser Lösungen erfolgt die Zugabe bis zur zumindest teilweisen Neutralisation der Carboxylgruppen erforderlichen Ammoniaks und, falls sofort Lösungen oder Dispersionen in Wasser hergestellt werden sollen, die Zugabe des Dispergierwassers, wobei die Zugabe des Ammoniaks vor, während oder im Anschluß an die Wasserzugabe erfolgen kann. Da die in organischer Lösung gelöst vorliegenden Umsetzungsprodukte aus den Ausgangskomponenten a) bis f) noch freie Isocyanatgruppen aufweisen, und da die Zugabe des Ammoniaks vor oder gleichzeitig mit der Zugabe von Wasser, beispielsweise des Dispergierwassers erfolgt (so daß die freien Isocyanatgruppen keine Gelegenheit haben mit dem Dispergierwasser abzureagieren), muß die Menge des Ammoniaks so bemessen werden, daß sie nicht nur zur Erreichung des gewünschten Neutralisationsgrades sondern auch zur "Neutralisation" der noch vorliegenden freien Isocyanatgruppen unter Kettenabbruch ausreicht. Der Gehalt an freien Isocyanatgruppen der in den oben beschriebenen Lösungen vorliegenden Umsetzungsprodukte aus a) bis e) und gegebenenfalls f) liegt im Falle der Mitverwendung von monofunktionellen Aufbaukomponenten f) im allgemeinen bei 0 bis 3, vorzugsweise 0 bis 1 Gew.-%, bezogen auf Feststoff, und im Falle des Verzichts einer Mitverwendung von Aufbaukomponenten f) bei 0 bis 10, vorzugsweise 0 bis 5 Gew.-%, bezogen auf Feststoff.

Das zur Neutralisation eingesetzte Ammoniak kann gasförmig oder in Form von Ammoniak abspaltenden Verbindungen wie beispielsweise Urotropin oder Ammoniumcarbonat zum Einsatz gelangen. Vorzugsweise werden jedoch wäßrige Ammoniaklösungen verwendet.

Im Anschluß an die Zugabe des als Lösungsmittel bzw. als Dispergiermedium dienenden Wassers, dessen Menge im übrigen so bemessen wird, daß 10 bis 60, vorzugsweise 20 bis 45 gew.-%ige Lösungen oder Dispersionen resultieren, erfolgt gegebenenfalls eine destillative Entfernung zumindest der Hauptmenge des verwendeten Hilfslösungsmittels.

Letztendlich werden somit die erfindungsgemäßen Polyurethane in Form von wäßrigen Lösungen oder in Form von wäßrigen Dispersionen, bei denen der mittlere Teilchendurchmesser bei ca. 10 bis 1000 nm, vorzugsweise bei 30 bis 500 nm liegt, erhalten.

Die Frage ob es sich um wäßrige Lösungen oder Dispersionen handelt ist in erster Linie von der Konzentration der hydrophilen Segmente abhängig.

Beim erfindungsgemäßen Verfahren können ohne weiteres auch höhere Mengen an tri- und polyfunktionellen Aufbaukomponenten, insbesondere Vernetzungsmitteln c) mitverwendet werden, so daß nicht nur Polyurethane mit im wesentlichen linearer Struktur sondern auch stark verzweigte Polyurethane erhalten werden können. Die Herstellung derartiger verzweigter Polyurethane ist insbesondere dann möglich, wenn durch Mitverwendung von monofunktionellen Kettenabbrechern f) dafür Sorge getragen wird, daß das mittlere Molekulargewicht der Polyurethane so niedrig gehalten wird, daß keine Viskosität- und Stabilitätsprobleme auftreten.

Die wäßrigen Lösungen und Dispersionen der erfindungsgemäßen Polyurethane sind frost- und lagerstabil und mit Wasser beliebig verdünnbar. Im Falle des Vorliegens von endständigen Harnstoffgruppen (Umsetzung von endständigen Isocyanatgruppen mit Ammoniak) oder von blockierten Isocyanatgruppen (Verwendung von Blockierungsmitteln) als Aufbaukomponente f) weisen die Polyurethane Reaktivzentren auf, die ohne Schwierigkeiten für Vernetzungsreaktionen herangezogen werden können, so ist es beispielsweise möglich endständige Harnstoffgruppen mit Formaldehyd in Methylolgruppen zu überführen, die dann mit geeigneten Vernetzern, beispielsweise mit Melaminharzen unter Vernetzung abreagieren. Erfindungsgemäße Polyurethane, die blockierte Isocyanatgruppen aufweisen, sind thermischen und chemischen Vernetzungsreaktionen zugänglich. In beiden Fällen können unter Verwendung entsprechender erfindungsgemäßer Polyurethane durch entsprechende Nachbehandlung nach der erfindungsgemäßen Verwendung besonders hochwertige Überzüge erhalten werden.

Die Lösungen bzw. Dispersionen der erfindungsgemäßen Polyurethane können zu einem beliebigen Zeitpunkt nach ihrer Herstellung formgebend verarbeitet werden. Sie trocknen im allgemeinen unmittelbar zu formstabilen Kunstoffüberzügen auf.

Je nach der gewählten chemischen Zusammensetzung und dem Gehalt an Urethangruppen erhält man Polyurethane mit unterschiedlichen Eigenschaften. So können weiche, thermoplastiche und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100 bis 180°C, thermoplastisch verarbeiten, sofern sie nicht chemisch vernetzt sind.

Die Verfahrensprodukte sind zur Beschichtung bzw. zum Überziehen und zum Imprägnieren von gewebten und nichtgewebten Textilien, Leder, Papier, Holz, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z.B. für Kork- oder Holzmehl. Glasfasern, Asbest, papierartige Materialien, Plastik- oder Gummiabfälle, keramische Materialien, als Hilfsmittel im Zeugdruck und in der Papierindustrie, als Zusatz zu Polymerisaten, als Schlichtemittel, beispielsweise für Glasfasern, und zur Lederausrüstung geeignet.

Die Dispersionen können mit anderen ionischen oder nichtionischen Dispersionen verschnitten werden, wie z.B. mit Polyvinylacetat, Polyethylen-, Polystyrol-, Polybutadien-, Polyvinylchlorid-, Polyacrylat- und Copolymerisat-Kunststoff-Dispersionen. Auch der Zusatz von an sich bekanten chemisch nicht fixierten, vorzugsweise ionischen Emulgatoren ist möglich, jedoch selbstverständlich nicht erforderlich.

Zur erfindungsgemäßen Verwendung der erfindungsgemäßen Dispersionen können diesen die übliche Hilfs- und Zusatzmittel zugesetzt werden. Hierzu gehören beispielsweise Vernetzungsmittel wie Carbodiimide, blockierte Diisocyanate sowie teilweise oder ganz veretherte Melaminharze, Pigmente, Metallic-Pigmente auf der Basis von Aluminiumflocken; Füllstoffe wie beispielsweise Ruß, Kieselsäure, Talkum, Kaolin, Titandioxid, Glas als Pulver oder in Form von Fasern, Cellulose oder Cellulose-aceto-butyrat oder, zur Erniedrigung der Filmbildungstemperatur und zur gezielten Verzögerung der Trocknung, Koaleszenzlöser, wie z.B. Diacetonalkohol, Butylglykol, N-Methylpyrrolidon, 1-Methoxypropanol, Cyclohexanon, Ethylenglykolmonobutylether oder Diethylenglykolmonobutylether, die jedoch nur in kleinen Mengen (weniger als 10 Gew.-%, bezogen auf Dispersion) zugesetzt werden.

Die Verarbeitung der Dispersionen zur Herstellung von Überzügen kann nach beliebigen Methoden, beispielsweise durch Walzen, Rakeln, Streichen, Gießen, Sprühen oder Tauchen erfolgen.

Die Trocknung der nach verschiedenen Applikationstechniken erhaltenen Produkte kann bei Raumtemperatur oder bei erhöhter Temperatur erfolgen.

In den nachfolgenden Beispielen beziehen sich alle Prozentangaben auf Gewichtsprozente. Alle Angaben in "Teilen" beziehen sich auf Gewichtsteile.

### Beispiel 1

620,5 Teile eines Polyesters aus Adipinsäure sowie Hexandiol-1,6 und 2.2-Dimethylpropandiol-1,3 (im Molverhältnis 0,65:0,35) der OH-Zahl 66 werden mit 36 Teilen Butandiol-1,4 43 Teilen eines monofunktionellen Polyetheralkohols der OH-Zahl 26, hergestellt durch Alkoxylierung von n-Butanol unter Verwendung eines Gemischs aus 83 % Ethylenoxid und 17 % Propylenoxid; 50,3 Teilen 2,2-Dimethylolpropionsäure und 13,4 Teilen Trimethylolpropan vermischt und bei 70 bis 110°C mit 488,4 Teilen 3-lsocyanatomethyl-3,5,5-trimethylcyclohexylisocyanat (IPDI) solange umgesetzt, bis der NCO-Gehalt des resultierenden NCO-Prepolymeren auf ca. 5,3% gefallen ist (NCO/OH-Äquivalentverhältnis: 1,69:1).

Das entstandene Prepolymer wird in 2000 Teilen Aceton gelöst und bei Raumtemperatur mit einer Lösung von 28,5 Teilen Ethylendiamin, 10,3 Teilen Diethylentriamin in 500 Teilen entionisierten Wassers versetzt (NCO/OH+NH-Verhältnis: 1,14). Nach 15-minütigem Nachrühren werden 62,2 g einer 25 %igen Ammoniaklösung eingerührt, so daß der gemessene pH-Wert bei 7 liegt, und nach 30 min. Nachrühren werden 1879 g entionisiertes Wasser innerhalb 15 min. bei ca. 30°C zugegeben.

Hierbei entsteht eine opake, bläuliche Dispersion des Festkörpers in einer Aceton-/Wassermischung, aus der das Aceton durch Destillation unter vermindertem Druck quantitativ entfernt wird. Zurück bleibt eine rein wäßrige Dispersion mit 35 % Festkörpergehalt. Charakteristische Daten (bezogen auf den Festkörper):
CO₂ ⁻: 28,0 mÄquivalente pro 100 g
EOx: 2,73 Gew.-%
Anwendungsbezogene Daten:
Auslaufzeit (DIN-4-Becher): 20 sec
pH: 7,6

Der bei Raumtemperatur erhaltene, ca. 35 µm dicke, klare Film einer gemäß Beispiel 1 hergestellten Dispersion hat nach 24 h Aushärtung bei Raumtemperatur eine Pendelhärte nach DIN 53157 von 170 sec und bleibt nach 6 h Einwirkung von Wasser unverändert.

### Beispiel 2

306,6 Teile eines Polyesters aus Adipinsäure und Hexandiol-1,6 der OH-Zahl 133 werden mit 51,8 Teilen Butandiol-1,4; 21,5 Teilen des einwertigen Polyetheralkohols gemäß Beispiel 1, 47,6 Teilen 2,2-Dimethylolpropionsäure vermischt und bei 70 bis 110°C mit 488,4 Teilen IPDI umgesetzt bis der NCO-Gehalt auf ca. 7,4 % gefallen ist (NCO/OH-Äquivalentverhältnis: 1,69).

Das entstandene Prepolymere wird in 1300 Teilen Aceton gelöst und bei Raumtemperatur mit einer Kettenverlängererlösung aus 51 Teilen Ethylendiamin und 500 Teilen entionisiertem Wasser versetzt (NCO/OH+NH-Verhältnis: 1,02). Nach 5-minütigem Nachrühren werden 24,14 g einer 25 %igen Ammoniaklösung eingerührt und nach 10 min. Nachrühren werden 1288,7 g entionisiertes Wasser innerhalb 5 min. zugegeben. Man erhält nach Abdestillieren des Acetons eine opake blaue 35 %ige Dispersion. Charakteristische Daten (bezogen auf den Festkörper):
CO₂ ⁻: 12,8 mÄquivalente pro 100 g
EOx: 1,8 gew.-%
Auslaufzeit (DIN-4-Becher): 29 sec
pH: 7,43
Pendelhärte: 135 sec (DIN 53157)

### Beispiel 3

| | | |
|---|---|---|
| Ansatz: | 306,6 | Teile Polyester gemäß Beispiel 2 |
| | 6,44 | Teile einwertiger Polyetheralkohol |
| | 97,15 | gemäß Beispiel 1 Teile Dimethylolpropionsäure |
| | 466,20 | Teile IPDI |
| | 2500 | Teile Aceton |
| | 48,0 | Teile Ethylendiamin |
| | 700 | Teile Wasser |
| | 72,54 | Teile 25%ige Ammoniaklösung |
| | 1445 | Teile Wasser |
| Durchführung: vergleiche Beispiel 2 | | |

Man erhält nach Abdestillation des Acetons eine kolloidale, transparente Lösung mit 30 % Festkörpergehalt.
Charakteristische Daten (bezogen auf den Festkörper):
CO₂ ⁻: 69 mÄquivalente pro 100 g
EOx: 0,57 gew.-%
Auslaufzeit (DIN-4-Becher): 40 sec
pH: 6,9
Pendelhärte (DIN 53 157): 192 sec

### Beispiel 4

| | | |
|---|---|---|
| Ansatz: | 650 | Teile Polypropylenglykol (OHZ: 56; MG: 2000) |
| | 86 | Teile einwertiger Polyetheralkohol gemäß Beispiel 1 |
| | 48,9 | Teile Dimethylolpropionsäure |
| | 40,5 | Teile Butandiol-1,4 |
| | 333 | Teile IPDI |
| | 114,8 | Teile Hexamethylendiisocyanat |
| | 3000 | Teile Aceton |
| | 24 | Teile Ethylendiamin |
| | 17,5 | Teile Hydrazinhydrat |
| | 380 | Teile Wasser |
| | 64,26 | Teile 25 %ige NH₃-Lösung |
| | 1544 | Teile Wasser |

Bei der Herstellung dieser wäßrigen Dispersion wird wie in Beispiel 1 verfahren. Man erhält eine 40 %ige weiße Dispersion mit starkem Blaustich. Die daraus erhaltenen Filme sind transparent, weich und hochelastisch.
Charakteristische Daten:
CO₂ ⁻: 27,9 mÄquivalent-%
EOx: 5,43 %
Auslaufzeit (DIN-4-Becher): 18 sec
pH: 6,9
Pendelhärte (DIN 53 157): 10 sec

### Beispiel 5

| | | |
|---|---|---|
| Ansatz: | 147 | Teile Polyester aus Beispiel 2 |
| | 200 | Teile Polypropylenglykol aus Beispiel 4 |
| | 268,75 | Teile einwertiger Polyetheralkohol gemäß Beispiel 1 |
| | 6,7 | Teile Dimethylolpropionsäure |
| | 40,5 | Teile Butandiol-1,4 |
| | 288,6 | Teile IPDI |
| | 123,0 | Teile HDI |
| | 3600 | Teile Aceton |
| | 18 | Teile Ethylendiamin |
| | 15 | Teile Hydrazinhydrat |
| | 350 | Teile Wasser |
| | 86,7 | Teile 25 %ige NH₃-Lösung |
| | 1246,3 | Teile Wasser |

Man verfährt wie in Beispiel 1 angegeben. Nach Abdestillation des Acetons erhält man eine sehr feinteilige Dispersion, die nach Abdunsten des Wassers einen klaren, sehr weichen, elastischen Film ergibt. Charakteristische Daten:
CO₂ ⁻: 4,5 mÄquivalente pro 100 g
EOx: 20,1 Gew.-%
pH: 8,7
Auslaufzeit (DIN-4-Becher): 38 sec
Shore A-Härte: 45

### Beispiel 6

Wie in Beispiel 1 beschrieben, wird ein NCO-Prepolymeres aus

| | |
|---|---|
| 552,5 | Teilen des in Beispiel 1 beschriebenen Polyesters, |
| 26,8 | Teilen des in Beispiel 1 beschriebenen Polyethers, |
| 13,4 | Teilen Trimethylolpropan, |
| 46,9 | Teilen DMPS, |
| 27,0 | Teilen Butandiol-1,4 und |
| 510,6 | Teilen IPDI |

umgesetzt, bis ein NCO-Wert von ca. 7,6 % erreicht ist und anschließend in 3000 Teilen Aceton gelöst. Die Kettenverlängerung erfolgt dann mit einer Lösung aus 27,0 Teilen Ethylendiamin in 500 g Wasser bei Raumtemperatur innerhalb 10 Minuten unter Bildung eines Umsetzungsprodukts mit einem NCO-Gehalt von ca. 4.5 %. Anschließend erfolgt Zugabe von 104,4 g Butanonoxim innerhalb 30 Minuten, und das Reaktionsgemisch, welches noch 0,8 % NCO-Gruppen, bezogen auf Feststoff, enthält, wird 1,5 h bei 50°C gehalten. Nach Abkühlung auf 40°C werden 18,71 Teile einer 25 %igen Ammoniaklösung zugegeben und 45 Min. verrührt.

Die Dispergierung erfolgt dann mit 1925,0 g entionisiertem Wasser innerhalb 5 Min. bei 40°C. Die entstandene weiße, schwach blaue Aceton-/Wassermischung wird destillativ vom Aceton befreit. Zurück bleibt eine wäßrige Dispersion mit 35 % Festkörper, die klare, sehr harte Filme zu bilden vermag. Der theoretische Gehalt an blockiertem Isocyanat beträgt 8,0 %. Die Viskosität der Dispersion beträgt unmittelbar nach der Herstellung 19 s (DIN-4-Becher) und ist nach 14 Tagen Lagerung bei Raumtemperatur unverändert.

## Patentansprüche

1. Verfahren zur Herstellung von in Wasser dispergierbaren oder löslichen Polyurethanen durch Umsetzung von
a) organischen Polyisocyanaten mit
b) organischen Verbindungen mit zwei gegenüber Isocyanatgruppen reaktionsfähigen Gruppen des Molekulargewichtsbereichs 300 bis 5000,
c) als Kettenverlängerungsmittel oder Vernetzer wirkenden Verbindungen mit mindestens zwei gegenüber Isocyanatgruppen reaktionsfähigen Gruppen des Molekulargewichtsbereichs 32 bis 299,
d) innerhalb von Polyetherketten angeordnete Ethylenoxideinheiten aufweisenden Aufbaukomponenten ausgewählt aus der Gruppe bestehend aus
d1) Diisocyanaten und/oder im Sinne der Isocyanatpolyadditionsreaktion difunktionellen Verbindungen mit gegenüber Isocyanatgruppen reaktionsfähigen Wasserstoffatomen mit seitenständigen, Ethylenoxid-Einheiten aufweisenden Polyetherketten,
d2) Monoisocyanaten und/oder im Sinne der Isocyanatpolyadditionsreaktion monofunktionellen Verbindungen mit gegenüber
Isocyanatgruppen reaktionsfähigen Wasserstoffatomen mit Ethylenoxideinheiten aufweisenden Polyetherketten und
d3) Gemischen von Verbindungen der unter d1) und d2) genannten Art,
e) Dihydroxymonocarbonsäuren, gegebenenfalls unter Mitverwendung von
f) im Sinne der Isocyanatpolyadditionsreaktion monofunktionellen, Ethylenoxideinheiten-freien organischen Verbindungen mit gegenüber Isocyanatgruppen reaktionsfähigen Gruppen, sowie gegebenenfalls unter Mitverwendung von
g) aus der Polyisocyanatchemie an sich bekannten Hilfs- und Zusatzmitteln,
wobei die Umsetzung der Ausgangskomponenten a) bis f) zweistufig unter Einhaltung eines Äquivalentverhältnisses von Isocyanatgruppen zu gegenüber Isocyanatgruppen reaktionsfähigen Gruppen von 0,8:1 bis 2:1 zumindest am Ende der Umsetzung in Gegenwart eines gegenüber Isocyanatgruppen inerten, mit Wasser mischbaren Lösungsmittels erfolgt, so daß eine Lösung eines Polyurethans mit einem Isocyanatgruppengehalt von bis zu 10 Gew.-% in einem derartigen Lösungsmittel vorliegt, anschließende, zumindest teilweise Neutralisation der in dem Polyurethan vorliegenden Carboxylgruppen, wobei Art und Mengenverhältnisse der Ausgangsmaterialien und der Neutralisationsgrad so bemessen wird, daß in dem gelösten Polyurethan 0.5 bis 30 Gew.-%, bezogen auf Feststoff, an innerhalb von end- und/oder seitenständig angeordneten Polyetherketten eingebauten Ethylenoxideinheiten und als alleinige weitere hydrophile Zentren 0,1 bis 120 Milliäquivalente pro 100 g Feststoff an Carboxylatgruppen vorliegen, wobei die Gesamtmenge dieser hydrophilen Gruppen so bemessen ist, daß die Löslichkeit bzw. Dispergierbarkeit der Polyurethane in Wasser gewährleistet ist,
dadurch gekennzeichnet, daß man als Dihydroxycarbonsäure solche der allgemeinen Formel 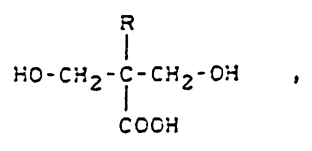 wobei R einen Alkylrest mit 1 bis 4 Kohlenstoffatomen bedeutet,
und als Neutralisationsmittel für die Carboxylgruppen Ammoniak verwendet und, falls eine wäßrige Lösung oder Dispersion der Polyurethane der organischen Lösung hergestellt werden soll, während oder anschließend an die Zugabe des als Neutralisationsmittel eingesetzten Ammoniaks das als Lösungs- bzw. Dispergiermittel dienende Wasser hinzufügt.

2. Verfahren gemäß Anspruch 1, dadurch gekennzeichnet, daß man den zur Neutralisation verwendeten Ammoniak in Form einer wäßrigen Lösung verwendet.

3. Verfahren gemäß Anspruch 1 und 2, dadurch gekennzeichnet, daß man zwecks Herstellung einer wäßrigen Lösung oder Dispersion der Polyurethane der organischen Lösung während oder anschließend an die Zugabe des als Neutralisationsmittel eingesetzten Ammoniaks das als Lösungs - bzw. Dispergiermittel dienende Wasser hinzufügt und gegebenenfalls im Anschluß hieran das Lösungsmittel zumindest teilweise destillativ entfernt.

4. Verwendung von wäßrigen Lösungen oder Dispersionen der gemäß Anspruch 1 bis 3 hergestellten Polyurethane als Beschichtungsmittel für beliebige Substrate.

## Claims

1. A process for preparing water-dispersible or watersoluble polyurethanes by reacting
a) organic polyisocyanates with
b) organic compounds with two groups capable of reacting with isocyanate groups with a molecular weight in the range 300 to 5000,
c) compounds acting as chain-extending agents or cross-linking agents with at least two groups capable of reacting with isocyanate groups with a molecular weight in the range 32 to 299,
d) structural components with ethylene oxide units incorporated within polyether chains, selected from the group consisting of
d1) diisocyanates and/or difunctional, in the context of the isocyanate polyaddition reaction, compounds with hydrogen atoms capable of reacting with isocyanate groups and with laterally sited polyether chains containing ethylene oxide units
d2) monoisocyanates and/or monofunctional, in the context of the isocyanate polyaddition reaction, compounds with hydrogen atoms capable of reacting with isocyanate groups and with polyether chains containing ethylene oxide units and
d3) mixtures of compounds of the type mentioned under d1) and d2),
e) dihydroxymonocarboxylic acids, optionally also using
f) monofunctional, in the context of the isocyanate polyaddition reaction, organic compounds with groups capable of reacting with isocyanate groups but which contain no ethylene oxide units,
and optionally also using
g) auxiliary agents and additives known per se from polyisocyanate chemistry,
wherein reaction of starting components a) to f) takes place in two stages while maintaining a ratio by equivalents of isocyanate groups to groups capable of reacting with isocyanate groups of 0.8:1 to 2:1, at least at the end of reaction, in the presence of a water-miscible solvent which is inert towards isocyanate groups, so that a solution of a polyurethane with an isocyanate group content of up to 10 wt.% is present in this type of solvent, followed by at least partial neutralisation of the carboxyl groups present in the polyurethane, wherein the type and ratio by amounts of starting materials and the degree of neutralisation are such that 0.5 to 30 wt.%, with respect to solids, of ethylene oxide units incorporated within terminal or laterally sited polyether chains and 0.1 to 120 milliequivalents per 100 g of solids of carboxylate groups, as the only other hydrophilic centres, are present in the dissolved polyurethane, wherein the total amount of these hydrophilic groups is such that the solubility or dispersibility of the polyurethane in water is guaranteed,
characterised in that compounds of the general formula 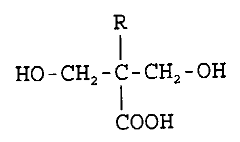 wherein R represents an alkyl group with 1 to 4 carbon atoms, are used as dihydroxycarboxylic acids and ammonia is used as the neutralising agent for the carboxyl groups and, if an aqueous solution or dispersion of the polyurethane is intended to be prepared, the water acting as solvent or dispersant is added to the organic solution during or after addition of the ammonia used as neutralising agent.

2. A process according to Claim 1, characterised in that the ammonia used for neutralisation is used in the form of an aqueous solution.

3. A process according to Claim 1 and 2, characterised in that, for the purpose of preparing an aqueous solution or dispersion of the polyurethane, the water acting as solvent or dispersant is added to the organic solution during or after addition of the ammonia used as neutralising agent and that, after this, the solvent is at least partly removed by distillation.

4. Use of aqueous solutions or dispersions of polyurethanes prepared in accordance with Claims 1 to 3 as coating agents for substrates of any kind.

## Revendications

1. Procédé pour la préparation de polyuréthannes solubles ou aptes à être dispersés dans l'eau, par la mise en réaction
a) de polyisocyanates organiques avec
b) des composés organiques contenant deux groupes aptes à réagir vis-à-vis de groupes isocyanate, dans le domaine de poids moléculaires de 300 à 5000,
c) des composés faisant office d'agents d'allongement de chaînes ou d'agents de réticulation contenant au moins deux groupes aptes à réagir vis-à-vis de groupes isocyanate, dans le domaine de poids moléculaires de 32 à 299
d) des composants d'édification présentant des unités d'oxyde d'éthylène disposées au sein de chaînes polyéthers, choisis parmi le groupe comprenant
d1) des diisocyanates et/ou des composés difonctionnels dans le sens de la réaction de polyaddition d'isocyanates contenant des atomes d'hydrogène aptes à réagir vis-à-vis de groupes isocyanate avec des chaînes polyéthers latérales présentant des unités d'oxyde d'éthylène,
d2) des monoisocyanates et/ou des composés monofonctionnels dans le sens de la réaction de polyaddition d'isocyanates contenant des atomes d'hydrogène aptes à réagir vis-à-vis de groupes isocyanate avec des chaînes polyéthers présentant des unités d'oxyde d'éthylène et
d3) des mélanges de composés du type mentionné sous d1) et d2),
e) des acides dihydroxymonocarboxyliques;
éventuellement avec l'utilisation conjointe
f) de composés organiques exempts d'unités d'oxyde d'éthylène, monofonctionnels dans le sens de la réaction de polyaddition d'isocyanates, contenant des groupes aptes à réagir vis-à-vis de groupes isocyanate,
éventuellement avec l'utilisation conjointe
g) d'agents auxiliaires et d'agents d'addition connus en soi dans la chimie des polyisocyanates,
la mise en réaction des composants de départ a) à f) s'effectuant en deux étapes, tout en maintenant un rapport d'équivalents entre les groupes isocyanate et les groupes aptes à réagir vis-à-vis des groupes isocyanate, de 0,8:1 à 2:1, au moins à la fin de la réaction, en présence d'un solvant miscible à l'eau inerte vis-à-vis des groupes isocyanate, de telle sorte que l'on obtienne au préalable une solution d'un polyuréthanne ayant une teneur en groupes isocyanate pouvant atteindre 10 % en poids dans un solvant inerte de ce type, avec neutralisation ultérieure au moins partielle des groupes carboxyle présents dans le polyuréthanne, le type et les rapports quantitatifs des matières de départ, ainsi que le degré de neutralisation étant mesurés de telle sorte que, dans le polyuréthanne dissous, sont présents de 0,5 à 30 % en poids rapportés à la teneur en produits solides, d'unités d'oxyde d'éthylène incorporées au sein de chaînes polyéthers disposées en position terminale et/ou latérale et, à titre de centres hydrophiles supplémentaires uniques, de 0,1 à 120 milliéquivalents par 100 g de produits solides de groupes carboxylate, la quantité totale de ces groupes hydrophiles étant mesurée de telle sorte que la solubilité ou l'aptitude à la dispersion des polyuréthannes dans l'eau est garantie,
caractérisé en ce qu'on utilise, comme acides dihydroxycarboxyliques, ceux répondant à la formule générale 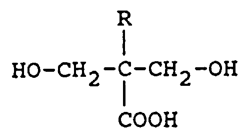 dans laquelle R représente un radical alkyle contenant de 1 à 4 atomes de carbone,
et de l'ammoniac comme agent de neutralisation pour les groupes carboxyle et s'il y a lieu de préparer une solution ou dispersion aqueuse des polyuréthannes, dans la solution organique, on ajoute l'eau servant d'agent de dissolution ou de dispersion pendant ou après l'addition de l'ammoniac utilisé comme agent de neutralisation.

2. Procédé selon la revendication 1, caractérisé en ce qu'on utilise l'ammoniac utilisé à des fins de neutralisation, sous forme d'une solution aqueuse.

3. Procédé selon la revendication 1 ou 2, caractérisé en ce que, à des fins de préparation d'une solution ou d'une dispersion aqueuse des polyuréthannes, on ajoute, à la solution organique, l'eau faisant office de solvant ou d'agent de dispersion, pendant ou suite à l'addition de l'ammoniac mis en oeuvre comme agent de neutralisation et eventuellement, suite à cette addition, on élimine le solvant au moins partiellement par distillation.

4. Utilisation de solutions ou de dispersions aqueuses de polyuréthannes préparés selon les revendications 1 à 3, comme agents d'enduction pour n'importe quel substrat.
